# EUROPEAN PATENT APPLICATION

(11) **EP 4 718 573 A1**
(43) Date of publication of application: **01.04.2026**
(21) Application number: 25200030.2
(22) Date of filing: 03.09.2025
(51) Int. Cl.: H01M 10/42, B60L 58/26, H01M 10/48, H01M 10/613, H01M 10/625, H01M 10/633

(54) **BATTERY MANAGEMENT DEVICE FOR TEMPERATURE CONTROL OF ENERGY STORAGE SYSTEM AND METHOD OF CONTROLLING TEMPERATURE OF ENERGY STORAGE SYSTEM**

(30) Priority: 27.09.2024 KR 20240131417
(71) Applicant: Samsung SDI Co., Ltd, Gyeonggi-do 17084 (KR)
(72) Inventor: KIM, Taejin, 17084 Yongin-si (KR)
(74) Representative: Marks & Clerk LLP

(57) **Abstract**

A battery management system includes a battery monitoring unit configured to monitor a temperature and voltage of a battery and determine whether an abnormality occurs in the battery, a fire monitoring unit configured to detect an occurrence of a fire, and a control unit configured to control a cooling temperature of a chiller according to results of monitoring by the battery monitoring unit and the fire monitoring unit. The chiller control unit is configured to reduce the cooling temperature of the chiller when the battery monitoring unit determines that the abnormality occurs. The chiller control unit is also configured such that, when the fire monitoring unit detects a fire, the chiller control unit operates the chiller at a lower cooling temperature than the reduced cooling temperature used when the abnormality occurs.

## Description

### BACKGROUND

### 1. Field of the Invention

The present disclosure relates to a battery management device for temperature control of a battery module/pack or an energy storage system, and a method of controlling the temperature of an energy storage system.

### 2. Discussion of Related Art

Primary batteries are not designed to be charged, while secondary batteries are designed to be discharged and recharged. Low-capacity secondary batteries are used in small portable electronic devices, such as smart phones, feature phones, notebook computers, digital cameras, and camcorders. Large-capacity secondary batteries are widely used as power sources for driving motors, such as of hybrid vehicles or electric vehicles, and for power storage. Secondary batteries may include an electrode assembly comprising a positive electrode and a negative electrode, a case that accommodates the electrode assembly, and a terminal(s) connected to the electrode assembly.

A plurality of secondary batteries are combined to form an energy storage system (ESS) with expanded voltage and/or current capacity. The energy storage system may include battery modules/packs used for vehicles or electrical appliances.

The battery module/pack or the energy storage system may include a battery management system (BMS). The BMS measures voltages (V), currents (I), temperatures (T), and the like of batteries installed in the electric vehicles or the energy storage system through sensors and controls these aspects of the batteries so that the batteries exhibit optimal performance.

The BMS generally performs battery monitoring and stops heating, ventilation, and air conditioning (HVAC) power supply and also stops power supply to a chiller when a fire is detected. Then, firefighting actions such as spraying an extinguishing agent are performed.

The information disclosed in this section is for enhancement of understanding of the background of the present disclosure. It may contain information that does not constitute related or prior art.

### SUMMARY OF THE DISCLOSURE

The present disclosure is directed to differentially controlling a temperature of a chiller when an abnormality and fire of a battery of a battery module/pack or an energy storage system occur, thereby maximizing the cooling effect of an ignited cell and nearby cells.

According to one aspect of the present disclosure, there is provided a battery management system including a battery monitoring unit configured to monitor a temperature and voltage of a battery and determine whether an abnormality occurs in the battery, a fire monitoring unit configured to detect an occurrence of a fire, and a chiller control unit configured to control a cooling temperature of a chiller according to results of monitoring by the battery monitoring unit and the fire monitoring unit, wherein the chiller control unit is configured to reduce the cooling temperature of the chiller when the battery monitoring unit determines that the abnormality occurs, and the chiller control unit is configured such that, when the fire monitoring unit detects a fire, the chiller control unit operates the chiller at a lower cooling temperature than the reduced cooling temperature used when the abnormality occurs.

According to another aspect of the present disclosure, there is provided a battery management system including a battery monitoring unit configured to monitor a temperature and voltage of a battery and determine whether an abnormality occurs in the battery, a fire monitoring unit configured to detect an occurrence of a fire, a chiller control unit configured (i) to reduce a cooling temperature of a chiller when the battery monitoring unit determines that the abnormality occurs, and (ii) to operate the chiller at a lower cooling temperature than the reduced cooling temperature when the fire monitoring unit detects a fire, an alarm generation unit configured to generate an alarm when the battery monitoring unit determines that the abnormality occurs, and a heating, ventilation, and air conditioning (HVAC) control unit configured to turn an HVAC system off when the fire monitoring unit detects a fire.

According to still another aspect of the present disclosure, there is provided a temperature control method of an energy storage system, which includes monitoring, using battery management system, a temperature and voltage of a battery and determining whether an abnormality occurs in the battery, outputting, using the battery management system, a signal to reduce a cooling temperature of a chiller when it is determined that the abnormality occurs, detecting, using the battery management system, an occurrence of a fire, and outputting, using the battery management system, a signal to operate a chiller at a lower cooling temperature than a reduced cooling temperature used when it is determined that the abnormality occurs when the fire is detected.

Aspects and features of the present disclosure are not limited to those described above, and other aspects and features not specifically mentioned herein will be clearly understood by those skilled in the art from the description of the present disclosure below.

At least some of the above and other features of the invention are set out in the claims.

### BRIEF DESCRIPTION OF THE DRAWINGS

The above and other objects, features and advantages of the present disclosure will become more apparent to those of ordinary skill in the art by describing example embodiments thereof in detail with reference to the accompanying drawings, in which:
FIG. 1 schematically illustrates a pouch-type secondary battery.
FIG. 2 is a cross-sectional view of a cylindrical secondary battery.
FIG. 3A is a top perspective view of a prismatic secondary battery.
FIG. 3B is a cross-sectional view taken along line I-I' of FIG. 3A.
FIG. 4 is an example of a secondary battery module in which secondary batteries are arranged.
FIG. 5 illustrates a configuration related to responding to an energy storage system (ESS) fire of a battery management system according to embodiments of the present disclosure;
FIG. 6 illustrates a general temperature control process of the battery management system;
FIG. 7 illustrates an operation process of the battery management system according to embodiments of the present disclosure;
FIG. 8 is a configuration diagram of a battery monitoring unit according to embodiments of the present disclosure;
FIG. 9 is a configuration diagram of a chiller control unit according to some embodiments of the present disclosure; and
FIG. 10 illustrates a temperature rise curve resulting from temperature control of the battery management system according to the embodiments of the present disclosure.

### DETAILED DESCRIPTION OF EXAMPLE EMBODIMENTS

Embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C," "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

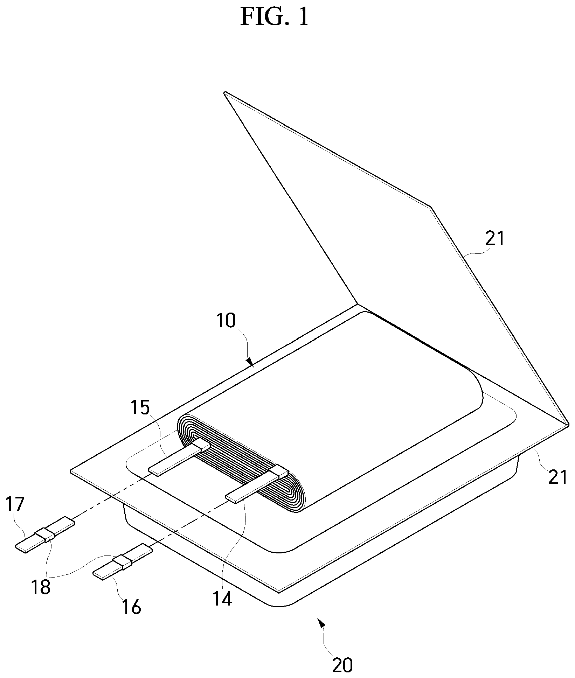

FIG. 1 schematically illustrates a pouch-type secondary battery. The pouch-type secondary battery includes an electrode assembly 10 and a pouch 20 that accommodates the electrode assembly 10.

The electrode assembly 10 includes a first electrode tab 14 and a second electrode tab 15 that may be electrically connected to respective external first and second terminal leads 16 and 17 by welding. A tab film 18 may be attached to each of the first terminal lead 16 and the second terminal lead 17 for insulation from the pouch 20.

The pouch 20 may be sealed by having sealing parts 21 at the edges thereof contact with each other with accommodating the electrode assembly 10 therein, in which case the sealing may be achieved with the tab film 18 interposed between the sealing parts 21. The sealing parts 21 of the pouch 20 may each be made of a thermal fusion material that has weak adhesion to metal. Thus, the thermal fusion material may be fused to the pouch 20 by interposing the thin tab film 18 between the sealing parts 21.

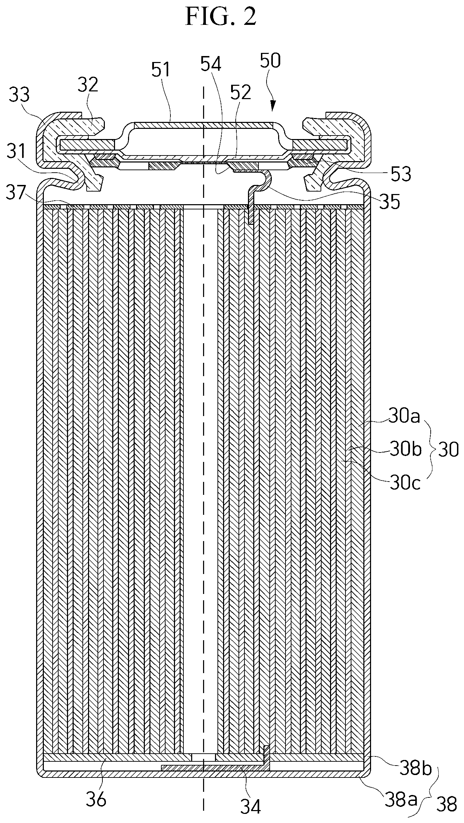

FIG. 2 illustrates a cylindrical secondary battery. As shown in FIG. 2, a secondary battery may include an electrode assembly 30 and a case 38 accommodating the electrode assembly 30 and an electrolyte therein. A cap assembly 50 is coupled to the case 38 to seal the case 38. An insulating plate 37 is positioned between the electrode assembly 30 and the cap assembly 50 inside the case 38.

The electrode assembly 30 may include a first electrode 30c and a second electrode 30a positioned with a separator 30b interposed between the electrodes 30c and 30a. The electrode assembly 30 may be wound in a jelly-roll shape.

The first electrode 30c includes a first substrate and a first active material layer on the first substrate. A first lead tab 35 may extend from a first uncoated portion of the first substrate where the first active material layer is not provided. The first lead tab 35 may be electrically connected to the cap assembly 50.

The second electrode 30a includes a second substrate and a second active material layer on the second substrate. A second lead tab 34 may extend outwardly from a second uncoated portion of the second substrate where the second active material layer is not provided. The second lead tab 34 may be electrically connected to the case 38. The first lead tab 35 and the second lead tab 34 may extend in opposite directions.

The first electrode 30c may function as a positive electrode. In such an embodiment, the first substrate may be made of, for example, an aluminum foil, and the first active material layer may include, for example, a transition metal oxide. The second electrode 30a may function as a negative electrode. In such an embodiment, the second substrate may be made of, for example, a copper foil or a nickel foil, and the second active material layer may include, for example, graphite.

The separator 30b prevents a short circuit between the first electrode 30c and the second electrode 30a while allowing movement of lithium ions therebetween. The separator 32 may be made of, for example, a polyethylene film, a polypropylene film, a polyethylene-polypropylene film, or the like.

The case 38 accommodates the electrode assembly 30 and the electrolyte. Together with the cap assembly 50, the case 38 forms the external appearance of the battery. The case 38 may have a substantially cylindrical body portion 38b and a bottom portion 38a connected to one side of the body portion 38b. A beading part 31 (e.g., a bead) may be formed in the body portion 38b and be deformed inwardly relative to the body portion 38b. A crimping part 33 (e.g., a crimp) bent inwardly may be formed at an open end of the body portion 38b. The beading part 31 can reduce or prevent movement of the electrode assembly 30 inside the case 38 and can facilitate seating of the gasket 32 and the cap assembly 50. The crimping part 33 may firmly fix the cap assembly 50 by pressing the edge of the case 38 against the gasket 32. The case 38 may be formed, for example, of iron plated with nickel.

The cap assembly 50 may be fixed to the inside of the crimping part 33 by a gasket 32 to seal the case 38. The cap assembly 50 may include an upper cap 51, a safety vent 52, a lower cap 53, an insulating member, and a sub plate 54. But the present disclosure is not limited to such a configuration and various alternative configurations are possible.

The upper cap 51 may be positioned at the uppermost part of the cap assembly 50. The upper cap 51 may include a terminal part that protrudes upwardly and is connected to an external circuit. An outlet for discharging gas may be arranged around the terminal part.

The safety vent 52 may be located under the upper cap 51. The safety vent 52 may include a protrusion part that protrudes convexly downwardly and is connected to the sub plate 54. At least one notch may be formed in the safety vent around the protrusion part. When gas is generated due to overcharging or abnormal operation of the secondary battery, the protrusion part is deformed upwardly by the pressure and separates from the sub plate 54 while the safety vent 52 is cut along the notch. The cut safety vent 52 may prevent the secondary battery from exploding by allowing for the gas to be discharged to outside of the secondary battery.

The lower cap 53 may be below the safety vent 52. The lower cap 53 may have a first opening for exposing the protrusion part of the safety vent 52 and a second opening for gas discharge. The insulating member may be positioned between the safety vent 52 and the lower cap 53 to insulate the safety vent 52 and the lower cap 53.

The sub plate 54 may be under the lower cap 53. In particular, the sub plate 54 may be fixed to a lower surface of the lower cap 53 to block the first opening of the lower cap 53, and the protrusion part of the safety vent 52 may be fixed to the sub plate 54. The first lead tab 35, which extends from the electrode assembly 30, may be fixed to the sub plate 54. Accordingly, the upper cap 51, the safety vent 52, the lower cap 53, and the sub plate 54 may be electrically connected to the first electrode 30c of the electrode assembly 30.

The insulating plate 37 may be in contact with the electrode assembly 30 below the beading part 31. The insulating plate 37 may have a tab opening through which the first lead tab 35 extends. The cap assembly 50, which is electrically connected to the first electrode 30c by the first lead tab 35, may face the electrode assembly 30 with the insulating plate 37 interposed therebetween such that the insulating plate 37 electrically insulates tab e.g., between the cap assembly 50 and the electrode assembly 30. Another insulating plate 36 may be provided for insulation between the electrode assembly 30 and the bottom portion 38a of the case 38.

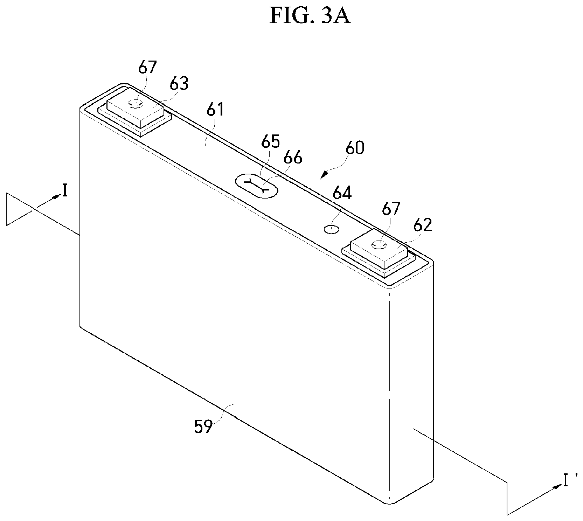

FIG. 3A is a top perspective view of a prismatic secondary battery, according to embodiments of the present disclosure.

A case 59 defines an overall appearance of the prismatic secondary battery. The case 59 may be made of a conductive metal, such as aluminum, aluminum alloy, or nickel-plated steel. In addition, the case 59 may provide a space for accommodating an electrode assembly therein.

A cap assembly 60 may include a cap plate 61 that covers the opening of the case 59. In some examples, the case 59 and the cap plate 61 may be made of a conductive material. Here, a first terminal 63 and a second terminal 62 may be electrically connected to respective positive and negative (or negative and positive) electrodes inside the case 59. The terminals 63 and 62 may protrude outward through the cap plate 61.

An electrolyte injection port 64 and a gas discharge hole 65 may be provided in the cap plate 61. A vent, i.e., a gas discharge device 66, may be connected to the gas discharge hole 65. The gas discharge device 66 is opened by gas generated inside the battery and allows the gas to be discharged to outside of the battery.

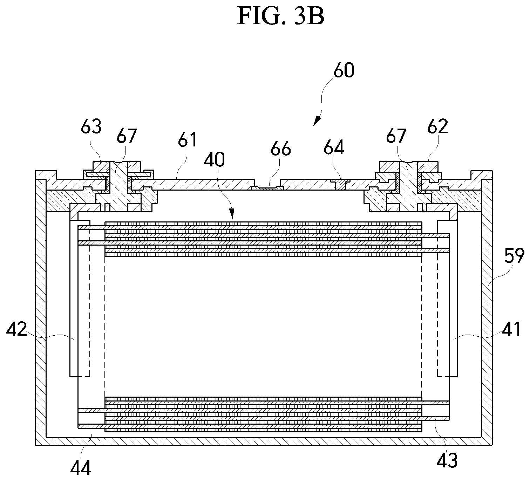

FIG. 3B is a cross-sectional view taken along the line I-I' of FIG. 3A, illustrating the internal configuration of the prismatic secondary battery and the structure of the cap assembly 60.

An electrode assembly 40 may be formed by winding or stacking one or more first electrode plates, separators, and second electrode plates, which are formed as thin plates or films. When the electrode assembly 40 is a wound stack, a winding axis may be parallel to the longitudinal direction of the case 59. In some other embodiments, the electrode assembly 40 is a stack type rather than a winding type. In addition, the electrode assembly 40 may be a Z-stack electrode assembly in which a positive electrode plate and a negative electrode plate are inserted to sides of a separator, which is then bent into a Z-stack. In addition, one or more electrode assemblies may be stacked such that long sides of the electrode assemblies are adjacent to each other and accommodated in the case. The shape of the electrode assembly 40 and the number of electrode assemblies in the case are not limited in the present disclosure. The first electrode plate of the electrode assembly may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 43 (e.g., a first uncoated portion) that is a region where the first electrode active material is not applied. The first electrode tab 43 may act as a current flow path between the first electrode plate and the first current collector 41. In some embodiments, when the first electrode plate is made, the first electrode tab 43 is formed by cutting such that the first electrode tab 43 protrudes to one side of the electrode assembly 40. In other embodiments, the first electrode tab 43 protrudes from a side of the electrode assembly 40 more than (e.g., farther than or beyond) the separator without the first electrode tab 43 being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 44 (or a second uncoated portion) that is a region where the second electrode active material is not applied. The second electrode tab 44 may act as a current flow path between the second electrode plate and the second current collector 42. In some embodiments, the second electrode tab 44 may be cut so as to protrude from the opposite side of the electrode assembly 40 from the side that the first electrode tab 43 protrudes. In other embodiments, the second electrode tab 44 may protrude more than (e.g., farther than or beyond) the separator without being separately cut.

The separator prevents or substantially reduces short circuits between the first electrode and the second electrode while allowing movement of lithium ions therebetween. The separator may be made of, for example, a polyethylene film, a polypropylene film, a polyethylene-polypropylene film, or the like.

In some embodiments, the electrode assembly 40 is accommodated in the case 59 along with an electrolyte. In the electrode assembly 40, the first current collector 41 and the second current collector 42 may be welded and connected to the first electrode tab 43 extending from the first electrode plate and the second electrode tab 44 extending from the second electrode plate, respectively.

The first current collector 41 and the second current collector 42 may be connected to the first terminal 62 and the second terminal 63 through connection members 67, respectively. In some embodiments, the connection members 67 may each have an outer peripheral surface that is threaded and may be fastened to the first terminal 62 and the second terminal 63 by screwing. However, the present disclosure is not limited to such a configuration. For example, the connection members 67 may also be coupled to the first terminal 62 and the second terminal 63 by riveting or welding.

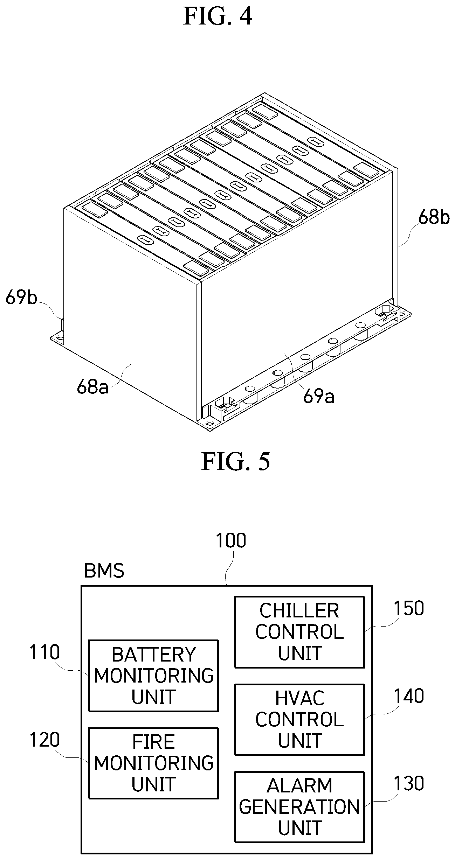

FIG. 4 is a view of a secondary battery module in which secondary batteries are arranged. For an energy storage system (ESS) or the like, the secondary battery module is made by arranging and connecting multiple secondary battery cells in the horizontal and/or vertical direction. The secondary batteries may be arranged in a space defined by a pair of facing end plates 68a and 68b and a pair of facing side plates 69a and 69b. The arrangement of the secondary battery and number may be provided based on desired voltage and current specifications.

The battery module illustrated in FIG. 4 may be a basic unit of the ESS, which may include a battery management system (BMS) for managing the battery. The BMS measures voltages (V), currents (I), temperatures (T), and the like of batteries (for example, installed in the electric vehicles) or the energy storage system through sensors and identifies them in advance to control the batteries to exhibit optimal performance. The BMS may include a detection device, a balancing device, and a control device.

The detection device may detect a state of a battery (e.g., voltage, current, temperature, etc.) to output state information indicating the state of the battery. The detection device may detect the voltage of each cell constituting the battery or of each battery module or each cell. The detection device may detect current flowing through each battery module constituting the battery module or the battery pack. The detection device may also detect the temperature of a cell and/or module on at least one point of the battery and/or an ambient temperature.

The balancing device may perform a balancing operation of a battery module and/or cells constituting the battery module. The control device may receive state information (e.g., voltage, current, temperature, etc.) of the battery module from the detection device. The control device may monitor and calculate the state of the battery module (e.g., voltage, current, temperature, state of charge (SOC), life span (state of health (SOH)), etc.) based on the state information received from the detection device. In addition, based on the state monitoring results, the control device may perform control functions (e.g., temperature control, balancing control, and charging/discharging control), protection functions (e.g., over-discharge, over-charge, and over-current prevention, short circuit, fire extinguishing functions, and the like), or the like. In addition, the control device may perform a wired or wireless communication function with an external device of the battery pack (e.g., a higher level controller or vehicle, charger, power conversion system, etc.).

The control device may control charging/discharging operation and protection operation of the battery. To this end, the control device may include a charge/discharge control unit, a balancing control unit, and/or a protection unit.

The battery management system is a system that monitors the battery state and performs diagnosis and control, communication, and protection functions. The battery management system may calculate the charge/discharge state, calculate battery life or state of health (SOH), cut off (as necessary) battery power (e.g., relay control), control thermal management (e.g., cooling, heating, etc.), perform a high-voltage interlock function, and/or may detect and/or calculate insulation and short circuit conditions.

A relay may be a mechanical contactor that is turned on and off by the magnetic force of a coil or a semiconductor switch, such as a metal oxide semiconductor field effect transistor (MOSFET). The relay control has a function of cutting off the power supply from the battery if (or when) a problem occurs in the battery system or the operating environment with the battery system (e.g., a vehicle) and may include one or more relays and pre-charge relays at the positive terminal and the negative terminal, respectively.

In the pre-charge control, there is a risk of inrush current occurring in the high-voltage capacitor on the input side of the inverter when the battery load is connected. To prevent inrush current, e.g., when starting a vehicle with the battery system, the pre-charge relay may be operated before connecting the main relay and the pre-charge resistor.

The high-voltage interlock is a circuit that uses a small signal to detect whether or not all high-voltage parts of the entire system including the battery system are connected and may have a function of forcibly opening a relay if an opening occurs at even one location on the entire loop.

FIG. 5 illustrates a configuration related to responding to an ESS fire of a battery management system according to embodiments of the present disclosure. The battery management system may be positioned in an environment in which a battery pack or an energy storage system including a plurality of battery cells, a chiller, and an HVAC (heating, ventilating, and air conditioning) system for temperature control thereof are present. The chiller may include a cooling water circulation device for cooling the battery module/pack or the energy storage system.

The battery management system (BMS) 100 may include a battery monitoring unit 110 for monitoring temperatures and voltages of battery cells and determining whether an abnormality occurs. The BMS 100 may also include a fire monitoring unit 120 for detecting the occurrence of a fire. The BMS 100 may further include a chiller control unit 150 for controlling a cooling temperature of the chiller according to the result of the monitoring of the battery monitoring unit 110 and the fire monitoring unit 120.

The chiller control unit 150 of the BMS 100 may be configured to reduce a cooling temperature of the chiller to a temperature lower than a currently set cooling temperature when the battery monitoring unit 110 determines that an abnormality has occurred and operate the chiller at a cooling temperature lower than a reduced cooling temperature used when the fire monitoring unit 120 detects a fire. Here, the lower cooling temperature may include the lowest cooling temperature at which the chiller may operate.

In other embodiments, the chiller control unit 150 may output a control signal to control the chiller. For example, the chiller control unit 150 may output a control signal to reduce the cooling temperature of the chiller when the battery monitoring unit 110 determines that a battery abnormality occurs. In addition, when the fire monitoring unit 120 detects a fire, the chiller control unit 150 may output a control signal to the chiller so that the corresponding chiller operates at the cooling temperature lower than the reduced cooling temperature used when the corresponding chiller determines that a battery abnormality has occurred.

According to some other embodiments, the BMS 100 may further include the alarm generation unit 130 for generating a warning alarm when the battery monitoring unit 110 determines that a battery abnormality has occurred. The warning alarm may be visual, auditory, or tactile media.

The BMS 100 may further include the HVAC control unit 140 for stopping the power supply to the HVAC system when the fire monitoring unit 120 detects a fire. Stopping power supply to the HVAC system is similar to the operation of the conventional BMS 100.

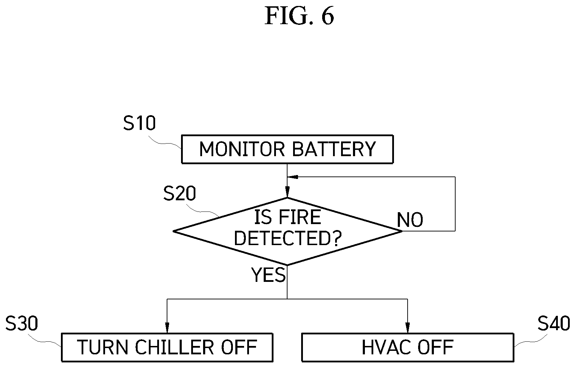

The BMS generally performs battery monitoring as in step S10 of the flowchart illustrated in FIG. 6. When a fire is detected at S20, the BMS stops power supply to the HVAC system S40 and also stops power supply to the chiller S30. One of the reasons for stopping the operation of the HVAC system is to block oxygen supply to the module/pack or the ESS.

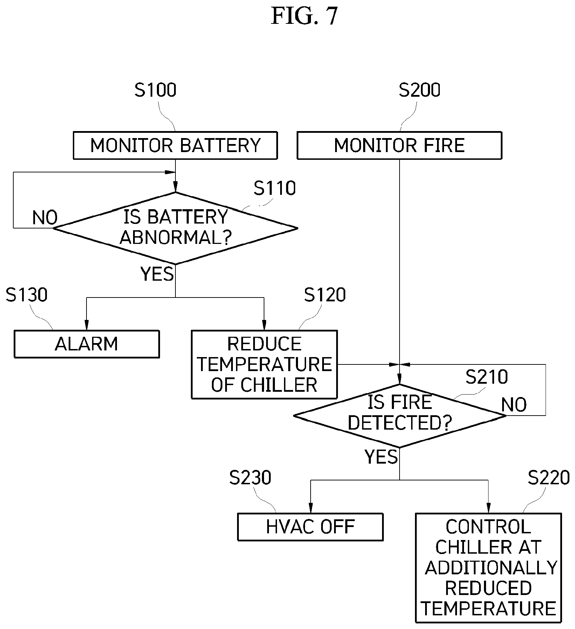

The BMS 100 according to some embodiments of the present disclosure controls a temperature according to the operating process illustrated in FIG. 7.

The battery monitoring unit 110 monitors the battery at S100. Upon determining that an abnormality in the battery has occurred at S110, the battery monitoring unit 110 provides a control signal to reduce the cooling temperature of the chiller to a temperature lower than the currently set temperature to the chiller at S120. Also, the alarm generation unit 130 generates a warning alarm at S130. Here, the abnormality of the battery may mean a state in which the battery has not yet ignited but is likely to ignite. Since the cooling temperature of the chiller is reduced (i.e., the cooling level is increased), a rise in the temperature of the battery may be slowed down, thereby delaying or preventing ignition.

Meanwhile, the fire monitoring unit 120 of the BMS 100 monitors the occurrence of a fire at S200. When the fire monitoring unit 120 detects a fire, the chiller control unit 130 controls the chiller to operate at a cooling temperature lower than the reduced cooling temperature (at S120) used when it is determined that a battery abnormality has occurred (at S110). That, the chiller control unit 130 controls the chiller to operate at an additionally reduced cooling temperature at S220. In addition, the HVAC control unit 140 stops the power supply to the HVAC system. When a fire occurs, the chiller is not turned off and operates at an additionally reduced cooling temperature. Thus, it is possible to actively respond to the fire, and the possibility of the occurrence of a chain fire is blocked by suppressing a rise in the temperature of cells adjacent to the cell in which the fire occurs. The additionally reduced cooling temperature may include the minimum cooling temperature that is the lowest cooling temperature at which the chiller can operate.

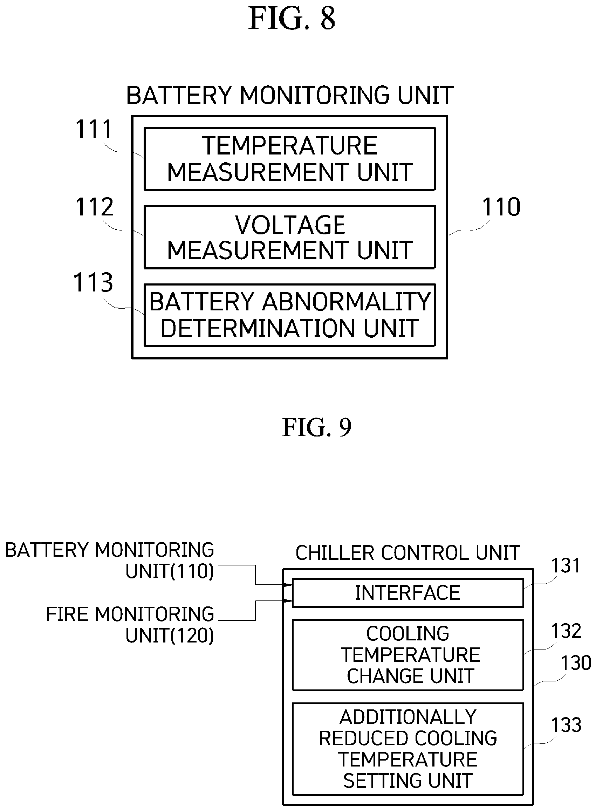

FIG. 8 is a configuration diagram of the battery monitoring unit 110 according to embodiments of the present disclosure.

The battery monitoring unit 110 may include a temperature measurement unit 111 and a voltage measurement unit 112 to acquire data for determining whether a battery abnormality occurs and include a battery abnormality determination unit 113 for determining whether the abnormality of the battery occurs based on the measured temperature or voltage. In some embodiments, the battery abnormality determination unit 113 may measure a temperature of a battery module or an ESS or a temperature of a specific cell (herein referred to as a temperature of a battery) to determine whether the battery abnormality occurs and may determine that the battery abnormality occurs when the measured temperature of the battery is at a preset threshold value or higher.

In other embodiments, the battery abnormality determination unit 113 may determine that the battery abnormality occurs when the temperature of the specific cell of the battery module or the ESS is [an average temperature of cells constituting the battery module or ESS + a preset temperature] or higher in order to determine whether the abnormality of the battery occurs. Here, the "preset temperature" may be, for example, 20 °C.

In other embodiments, the battery abnormality determination unit 113 may measure a voltage of a battery module or an ESS or a voltage of a specific cell (herein referred to as a voltage of a battery) to determine whether the battery abnormality occurs. The battery abnormality determination unit 113 may determine that the abnormality of the battery occurs when the measured voltage of the battery is at preset threshold value or higher.

FIG. 9 illustrates a configuration of a chiller control unit 130 according to embodiments of the present disclosure. The chiller control unit 130 may include an interface 131 with the battery monitoring unit 110 and the fire monitoring unit 120. Through the interface 131, the chiller control unit 130 may receive a battery abnormality signal from the battery monitoring unit 110 and/or receive a fire occurrence detection signal from the fire monitoring unit 120.

The chiller control unit 130 may include a cooling temperature change unit 132 for providing the chiller with a control signal to change the cooling temperature of the chiller to a temperature lower than the currently set temperature in response to receiving the battery abnormality signal. The amount of change (reduction amount) in cooling temperature may be a constant value or may be a value dependent on a value included in the signal received from the battery monitoring unit 110.

The chiller control unit 130 may also include an additional reduction cooling temperature setting unit 133 for providing the chiller with a control signal to operate the chiller by additionally reducing the cooling temperature of the chiller in response to receiving the fire occurrence detection signal from the fire monitoring unit 120. As described above, the additionally reduced cooling temperature may include the lowest cooling temperature value at which the chiller may operate.

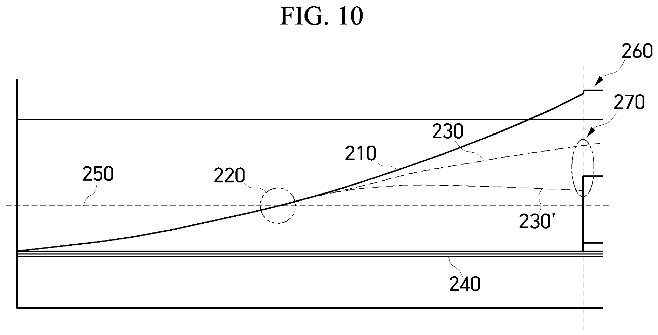

FIG. 10 shows the effect of the temperature control of the BMS according to embodiments of the present disclosure.

When a specific temperature value 250 is higher than the average temperature 240 of the cell, the battery monitoring unit 110 determines that there is an abnormality in the battery, but an ignition has not occurred. The battery monitoring unit 110 therefore generates a warning alarm 220 and reduces the cooling temperature of the chiller. Due to the reduction in the cooling temperature, the temperature of the battery does not follow the steeply rising curve 210, but rather follows temperature rise slower rising curves 230 and 230' such that an ignition temperature 260 is not reached. Thus, the abnormality in the battery may not lead to a fire.

When the abnormality of the battery escalates and a fire occurs at the ignition temperature 260, the chiller may operate at the additionally reduced cooling temperature, thereby suppressing a rise in the temperature of the battery module or the ESS and blocking the spread of ignition to other cells. In FIG. 10, a reference numeral 270 denotes a region where fire does not occur.

Hereinafter, a temperature control method according to embodiments of the present disclosure will be described. The temperature control method (e.g., of an ESS) may include monitoring, by a battery management system, a temperature and voltage of a battery cell and determining whether an abnormality occurs in the battery cell, outputting, by the battery management system, a signal to reduce a cooling temperature of a chiller when it is determined that an abnormality has occurred, detecting, by the battery management system, the occurrence of a fire, and outputting, by the battery management system upon detecting the fire, a signal to operate the chiller at a cooling temperature lower than the reduced cooling temperature used when a battery abnormality occurs. In some embodiments, the cooling temperature lower than the reduced cooling temperature used in the event of a battery abnormality may be the lowest cooling temperature at which the chiller may operate.

The temperature control method may further include the battery management system generating an alarm when it is determined that the abnormality of the battery has occurred. In addition, in some embodiments the temperature control method may further include an operation of outputting, by the battery management system, a signal to turn off an HVAC system upon detecting a fire.

In some embodiments, the battery management system may measure a temperature of a battery to determine whether the abnormality in the battery occurs and determine that an abnormality in the battery occurs when the temperature of the battery is a threshold value or higher. Further, the battery management system may determine that the abnormality in the battery occurs when an average temperature of cells is higher than a preset temperature. In other embodiments, the battery management system may measure a voltage of a battery to determine whether the abnormality in the battery occurs and determine that an abnormality in the battery occurs when the voltage of the battery is a threshold value or higher.

The above-described temperature control method, which may be used with an energy storage system, can be clearly understood from the description of the BMS 100 described above.

According to the present disclosure, when it is determined that a battery abnormality has occurred but an ignition has not occurred, a warning alarm is generated and a cooling temperature of a chiller is reduced to slow an increase in a battery temperature so as not to reach an ignition temperature, which may thereby prevent a fire. In addition, in the case of a fire, a chiller can be operated at a cooling temperature lower than the reduced cooling temperature used when it is determined that an abnormality in the battery occurs (e.g., a lowest cooling temperature based on performance of the chiller), thereby additionally suppressing the increase in the temperature of a battery module or an energy storage system and blocking fire diffusion to other cells.

Although the present disclosure has been described above with respect to embodiments thereof, the present disclosure is not limited thereto. Various modifications and variations can be made thereto by those skilled in the art within the scope of the present disclosure.

Embodiments are set out in the following clauses:
Clause 1. A battery management system comprising:
   a battery monitoring unit configured to monitor a temperature and voltage of a battery and determine whether an abnormality occurs in the battery;
   a fire monitoring unit configured to detect an occurrence of a fire;
   a chiller control unit configured (i) to reduce a cooling temperature of a chiller when the battery monitoring unit determines that the abnormality occurs, and (ii) to operate the chiller at a lower cooling temperature than the reduced cooling temperature when the fire monitoring unit detects a fire;
   an alarm generation unit configured to generate an alarm when the battery monitoring unit determines that the abnormality occurs; and
   a heating, ventilation, and air conditioning (HVAC) control unit configured to turn an HVAC system off when the fire monitoring unit detects a fire.
Clause 2. The battery management system of clause 1, wherein the lower cooling temperature is a lowest cooling temperature at which the chiller is operable.
Clause 3. The battery management system of clause 1 or clause 2, wherein the battery monitoring unit is configured to measure a temperature of the battery to determine whether the abnormality occurs and determine that the abnormality occurs when the temperature of the battery is at a threshold value or higher.
Clause 4. The battery management system of any of clauses 1-3, wherein the battery monitoring unit is configured to determine that the abnormality occurs when the temperature of the battery cell is [an average temperature + a preset temperature] or higher.
Clause 5. The battery management system of any of clauses 1-4, wherein the battery monitoring unit is configured to measure a voltage of the battery to determine whether the abnormality occurs and determine that the abnormality occurs when the voltage of the battery cell is at a threshold value or higher.

## Claims

1. A battery management system comprising:
a battery monitoring unit configured to monitor a temperature and voltage of a battery and determine whether an abnormality occurs in the battery;
a fire monitoring unit configured to detect an occurrence of a fire; and
a chiller control unit configured to control a cooling temperature of a chiller according to results of monitoring by the battery monitoring unit and the fire monitoring unit,
wherein the chiller control unit is configured to reduce the cooling temperature of the chiller when the battery monitoring unit determines that the abnormality occurs, and
wherein the chiller control unit is configured such that, when the fire monitoring unit detects a fire, the chiller control unit operates the chiller at a lower cooling temperature than the reduced cooling temperature used when the abnormality occurs.

2. The battery management system as claimed in claim 1, wherein the lower cooling temperature is a lowest cooling temperature at which the chiller is operable.

3. The battery management system as claimed in claim 1 or claim 2, further comprising an alarm generation unit configured to generate an alarm when the battery monitoring unit determines that the abnormality occurs.

4. The battery management system as claimed in any preceding claim, further comprising a heating, ventilation, and air conditioning (HVAC) control unit configured to turn an HVAC system off when the fire monitoring unit detects a fire.

5. The battery management system as claimed in any preceding claim, wherein the battery monitoring unit is configured to measure a temperature of the battery to determine whether the abnormality has occurred and determine that the abnormality occurs when the temperature of the battery is at a threshold value or higher.

6. The battery management system as claimed in any preceding claim, wherein the battery monitoring unit is configured to determine that the abnormality occurs when a temperature of the battery is [an average temperature of cells constituting a battery module or ESS + a preset temperature] or higher.

7. The battery management system as claimed in any preceding claim, wherein the battery monitoring unit is configured to measure a voltage of the battery to determine whether the abnormality occurs and determine that the abnormality occurs when the voltage of the battery is at a threshold value or higher.

8. A battery management system comprising:
a battery monitoring unit configured to monitor a temperature and voltage of a battery and determine whether an abnormality occurs in the battery;
a fire monitoring unit configured to detect an occurrence of a fire;
a chiller control unit configured (i) to reduce a cooling temperature of a chiller when the battery monitoring unit determines that the abnormality occurs, and (ii) to operate the chiller at a lower cooling temperature than the reduced cooling temperature when the fire monitoring unit detects a fire;
an alarm generation unit configured to generate an alarm when the battery monitoring unit determines that the abnormality occurs; and
a heating, ventilation, and air conditioning (HVAC) control unit configured to turn an HVAC system off when the fire monitoring unit detects a fire.

9. A temperature control method of an energy storage system, the method comprising:
monitoring, using a battery management system, a temperature and voltage of a battery and determining whether an abnormality occurs in the battery;
outputting, using the battery management system, a signal to reduce a cooling temperature of a chiller when it is determined that the abnormality occurs;
detecting, using the battery management system, an occurrence of a fire; and
outputting, using the battery management system, a signal to operate a chiller at a lower cooling temperature than the reduced cooling temperature used when it is determined that the abnormality occurs when the fire is detected.

10. The temperature control method as claimed in claim 9, wherein the lower cooling temperature lower is a lowest cooling temperature at which the chiller is operable.

11. The temperature control method as claimed in claim 9 or claim 10, further comprising generating, using the battery management system, an alarm when it is determined that the abnormality occurs.

12. The temperature control method as claimed in any of claims 9-11, further comprising outputting, using the battery management system, a signal to turn a heating, ventilation, and air conditioning (HVAC) system off when the fire is detected.

13. The temperature control method as claimed in any of claims 9-12, comprising measuring, using the battery management system, a temperature of the battery to determine whether the abnormality occurs and determining that the abnormality occurs when the temperature of the battery is at a threshold value or higher.

14. The temperature control method as claimed in any of claims 9-13, wherein the abnormality is determined to occur when an average temperature of cells of the battery is higher than a preset temperature.

15. The temperature control method as claimed in any of claims 9-14, comprising measuring, using the battery management system, a voltage of the battery to determine whether the abnormality occurs and determining that the abnormality occurs when the voltage of the battery is at a threshold value or higher.
